# EUROPÄISCHE PATENTSCHRIFT

(11) **EP 3 210 916 B1**
(45) Veröffentlichungstag und Bekanntmachung des Hinweises auf die Patenterteilung: **03.06.2020**
(21) Anmeldenummer: 17156858.7
(22) Anmeldetag: 20.02.2017
(51) Int. Cl.: B65G 47/29, B65G 47/88, B65G 17/00, B23Q 7/14, B65G 35/06

(54) **STAUFÖRDERER MIT EINER VEREINZELUNGSVORRICHTUNG UND VERFAHREN ZUM VEREINZELN**
ACCUMULATING CONVEYOR WITH A SEPARATING DEVICE AND METHOD FOR SEPARATING
CONVOYEUR D'ACCUMULATION AVEC UN DISPOSITIF DE SÉPARATION ET PROCÉDÉ DE SÉPARATION

(30) Priorität: 24.02.2016 DE 102016103211
(43) Veröffentlichungstag der Anmeldung: 30.08.2017
(73) Patentinhaber: Koppold, Markus, 86562 Berg im Gau (DE)
(72) Erfinder: Koppold, Markus, 86562 Berg im Gau (DE)
(74) Vertreter: Fischer & Konnerth

(56) Entgegenhaltungen:
- EP-A1- 2 687 464
- EP-A2- 0 486 324
- DE-A1-102009 036 894
- DE-C1- 4 323 563
- JP-A- S58 113 020
- JP-A- 2011 111 279
- US-A- 2 611 174
- US-A- 5 465 827
- Anonymous: "Äußere Dichtungen", , 17. Juli 2013 (2013-07-17), XP055386992, Gefunden im Internet: URL:http://www.skf.com/de/products/bearing s-units-housings/ball-bearings/principles/ application-of-bearings/sealing-arrangemen ts/external-seals/index.html [gefunden am 2017-06-30]

## Beschreibung

Die vorliegende Erfindung betrifft einen Stauförderer gemäß dem Oberbegriff des Anspruchs 1.

Die DE 10 204 030 958 B4 lehrt einen "Vorrichtung zum Fördern von Stückgut" genannten Stauförderer, dessen Werkstückträger zum Beladen und Entladen an bestimmten Positionen der Förderstrecke des Stauförderers mittels sogenannten Stoppern angehalten werden können, damit Roboter punktgenau auf Werkstücke zugreifen können, welche auf den Werkstückträgern transportiert werden. Die Stopper sind einfache Stäbe, die von Antriebszylindern in den Fahrweg der Werkstückträger gefahren werden und deren Weiterfahrt auf dem Stauförderer blockieren.

Aus der DE 102 04 260 A1 ist ein Stauförderer bekannt, der zum Stoppen und Vereinzeln von Werkstückträgern paarweise angeordnete über eine Wippe gesteuerte Stifte aufweist, welche in die Bewegungsbahn der Werkstückträger hineingefahren werden, wobei ein erster Stift die Entladeposition und ein anderer im Förderweg nachgeordneter Stift die Warteposition für den folgenden Werkstückträger definiert.

In der DE 10 2012 106 548 A1 wird ein Stauförderer beschrieben, welcher mit von einem Endlosförderelement angetriebenen Transportschlitten bestückt ist, wobei an den dort genannten Aufgabe- und Entnahmestellen für von dem Transportschlitten zu fördernde Bauteile Vereinzelungsvorrichtungen für die Transportschlitten nicht beschrieben werden.

Schließlich ist aus der DE 199 45 064 B4 eine Vorrichtung zum Anhalten von Stückgut, insbesondere Werkstückträgern auf einem Stauförderer bekannt, die zwei sogenannte Anschlagschenkel zum Eingriff in die Bewegungsbahn der Werkstückträger aufweisen, welche mittels Federkraft zurückschwenkbar angeordnet sind.

Diese drei genannten Vorrichtungen zeichnen sich durch eine ungünstige Teilevielfalt aus, wobei gleichzeitig die Präzision der Arbeitsweise der Vorrichtungen nicht ausreichend zu sein scheint. Besonders in Fertigungsstraßen, welche nahezu zu 100 Prozent von Robotern bedient und von Stauförderern beschickt werden ist die Wiederholgenauigkeit und Zuverlässigkeit der Positionierung von angelieferten Werkstücken außerordentlich wichtig. Hierbei ist die Vereinzelung von Werkstückträgern auf den Stauförderern eine Topdisziplin.

Die JP S58 113020 A beschreibt einen Stauförderer gemäß dem Oberbegriff von Anspruch 1.

Der Erfindung liegt die Aufgabe zugrunde, eine Vereinzelungsvorrichtung und ein Verfahren zum Vereinzeln vorzuschlagen, bei welchen die aus dem Stand der Technik bekannten Nachteile vermieden oder wenigstens stark vermindert werden.

Die Aufgabe wird zunächst gelöst mit einem Stauförderer gemäß Anspruch 1, nämlich einem Stauförderer, mit wenigstens einem Werkstückträger und mit einer Vereinzelungsvorrichtung, mit wenigstens einem Anschlag zum Anhalten und/oder Freigeben des Werkstückträgers und mit einem Antrieb für den Anschlag, welche wenigstens einen Drehantrieb, und wenigstens einen an dem Drehantrieb angeordneten im Wesentlichen als C-förmige Fangklaue ausgebildeten Anschlag aufweist, wobei der Drehantrieb derart angeordnet ist, dass er und damit die Fangklaue in verschiedene Stellungen wie eine Stopp-, Fang-, Halte- und Freigabestellung für den Werkstückträger, drehbar, zum Zusammenwirken mit einem Halteelement des Werkstückträgers, ausgebildet ist, wobei die Vereinzelungsvorrichtung zwei Drehantriebe mit zwei zugeordneten C-förmigen Fangklauen aufweist, wobei der Stauförderer dadurch gekennzeichnet ist, dass der Werkstückträger zwei runde Halteelemente zum Zusammenwirken mit den Fangklauen aufweist, und dass die C-förmigen Fangklauen der Vereinzelungsvorrichtung in der Haltestellung mit Ihren Öffnungen zueinander zeigen und dass die runden Halteelemente als Wälzlager, wie z. B. Kugel-, Rollen- oder Nadellager ausgebildet sind. Die erfindungsgemäße Vorrichtung zeichnet sich vorteilhafterweise durch eine sehr einfache Konstruktion aus. Aufgrund der C-förmigen Ausbildung der Fangklaue kann ein Werkstückträger eindeutig geführt und positioniert werden. Fehlbewegungen des Werkstückträgers sind nicht möglich. Die gesamte Vorrichtung beinhaltet sehr wenige Bauteile, wobei auch noch nur der Drehantrieb bewegt wird. Dies ermöglicht eine einfache, aber doch sehr präzise und wiederholgenaue Vereinzelung.

Diese Ausbildung vereinfacht die Konstruktion, indem eine auf der Drehachse des Drehantriebs angeordnete C-förmige Fangklaue das runde Halteelement durch eine reine Drehbewegung "einfangen" und fixieren kann, wenn die Achse des runden Halteelements mit der Drehachse des Drehantriebs zusammenfällt.

Damit wird die Verschleißfestigkeit der Anordnung erhöht, da sich die Reibung zwischen der Fangklaue und dem runden Halteelement vermeiden lässt. Bei Drehung der Fangklaue wird sich das drehgelagerte Halteelement, ausgebildet z. B. als Wälzlager wie Kugel-, Rollen- oder Nadellager ebenfalls nahezu reibungsfrei mitdrehen.

Eine vorteilhafte Ausbildung der Erfindung ist dadurch gekennzeichnet, dass der Außenring der Wälzlager einen Bezug aus Hartgummi aufweist. Damit lässt sich die erfindungsgemäße Vorrichtung sanfter betreiben, da der Bezug aus Hartgummi wie ein Dämpfer wirkt und damit ein verschleißärmerer Betrieb möglich ist, was wiederum die Lebensdauer der Vorrichtung erhöht.

Wieder eine weitere vorteilhafte Ausbildung der Erfindung ist dadurch gekennzeichnet, dass die Drehantriebe Schrittmotoren sind. Damit lassen sich die Drehpositionen der C-förmigen Fangklauen sehr exakt und wiederholgenau einstellen und auch dokumentieren bzw. überwachen.

In noch einer anderen vorteilhaften Ausbildung der Erfindung sind die Fangklauen derart ausgebildet, dass sie in einer Ausnehmung zur Aufnahme der runden Halteelemente eine oder mehrere Nuten und / oder Riefen aufweist. Die Nuten, ausgeführt z. B. als Längs-, Spiral- und/oder kreisförmige Nuten dienen der Aufnahme und/oder Abführung von Schmutz und Fett und dergl. Sie tragen auch zur Steigerung der Betriebssicherheit bei.

In wieder einer anderen vorteilhaften Ausbildung der Erfindung ist der Stauförderer dadurch gekennzeichnet, dass die Vereinzelungsvorrichtung eine Steuereinrichtung zur Steuerung des Drehantriebs oder der Drehantriebe aufweist. Mittels einer solchen Steuereinrichtung kann das Zusammenwirken von Stauförderer und Werkstückträger evtl. auch via eine übergeordnete Anlagensteuerung optimiert werden.

Die Aufgabe wird auch gelöst mit einem Verfahren, nämlich einem Verfahren zum Vereinzeln von Werkstückträgern eines Stauförderers gemäß einem der Vorrichtungsansprüche, welches gekennzeichnet ist durch folgende Schritte: a) Anhalten oder Stoppen eines Werkstückträgers mittels der C-förmigen Fangklaue, wobei diese vom Drehantrieb in eine Stellung gedreht ist, in welcher ein rundes Haltelement des Werkstückträgers gegen die Außenseite der Fangklaue anschlägt und den Werkstückträger anhält, b) Fangen der runden Halteelemente, wobei die Öffnung der C-förmigen Fangklaue um etwa 90° zu dem runden Halteelement, wobei die Öffnung der C-förmigen Fangklaue wieder um etwa 90° zurückgedreht wird, sodass die Wange der Fangklaue wieder im Wesentlichen quer zur Bewegungsrichtung des Werkstückträgers liegt, d) Freigeben des runden Haltelements, wobei die Öffnung der C-förmigen Fangklaue um weitere etwa 90° gedreht wird, bis das runde Halteelement und damit der Werkstückträger von der C-förmigen Fangklaue freigegeben sind und das runde Haltelement die Ausnehmung der C-förmigen Fangklaue, durch deren Öffnung verlassen kann. Mit der Durchführung des erfindungsgemäßen Verfahrens lässt sich bei höchst einfacher Vorgehensweise eine bisher nicht erreichte Betriebssicherheit und Präzision realisieren.

Eine vorteilhafte Ausbildung des erfindungsgemäßen Verfahren ist dadurch gekennzeichnet, dass bei Einsatz von zwei Drehantrieben und damit auch zwei C-förmigen Fangklauen die Drehbewegungen der beiden C-förmigen Fangklauen jeweils zueinander entgegengerichtet ausgeführt werden. Diese Vorgehensweise erhöht noch einmal die erreichbare Positionierungsgenauigkeit für die Werkstückträger.

Zum besseren Verständnis der Erfindung und um zu zeigen, wie diese ausgeführt werden kann, wird sie im Folgenden anhand von Ausführungsbeispielen mit Hilfe einer Zeichnung näher erläutert.
Fig. 1 zeigt schematisiert einen Stauförderer aus dem Stand der Technik mit einem beispielhaft skizzierten Werkstückträger von der Seite.
Fig. 2 zeigt schematisiert den Stauförderer gemäß Fig. 1 im Schnitt gemäß der Schnittebene A - A' von Fig. 1, wobei hier bereits eine nicht beanspruchte Vereinzelungsvorrichtung im Zusammenwirken mit einem Werkstückträger dargestellt ist.
Fig. 3 zeigt stark schematisiert einen Ausschnitt eines Stauförderers mit einem Werkstückträger von oben, in Blickrichtung des Pfeils D aus Fig. 2 sowie ein Beispiel einer nicht beanspruchten Vereinzelungsvorrichtung, wobei sich der in Richtung des Pfeils F bewegende Werkstückträger mit seinem Halteelement kurz vor der C-förmigen Fangklaue befindet.
Fig. 3a bis 3d zeigen stark schematisiert einen Ausschnitt von Fig. 3, wobei der Drehantrieb jeweils ortsfest bleibt und sich der Werkstückträger jeweils in einer weiteren Vereinzelungsstellung befindet.
Fig. 4 zeigt stark schematisiert die erfindungsgemäße Vereinzelungsvorrichtung, mit zwei relativ zur Mittellinie einander gegenüberliegenden Drehantrieben mit zwei zugeordneten C-förmigen Fangklauen.
Fig. 4a bis 4d zeigen stark schematisiert analog zur Fig. 4 einen Ausschnitt von Fig. 4, wobei die Drehantriebe jeweils ortsfest bleiben und sich der Werkstückträger jeweils in einer weiteren Vereinzelungsstellung befindet.
Fig. 5 zeigt schematisiert einen Drehantrieb mit aufgesetzter Fangklaue gemäß der Erfindung in perspektivischer Ansicht.
Fig. 6, 6b bis 6d zeigen stark schematisiert analog zu den Fig. 4, 4b bis 4d die erfindungsgemäße Vereinzelungsvorrichtung, mit zwei relativ zur Mittellinie einander gegenüberliegenden Drehantrieben, wobei die Drehantriebe jeweils ortsfest bleiben und sich der Werkstückträger jeweils in einer weiteren Vereinzelungsstellung befindet.

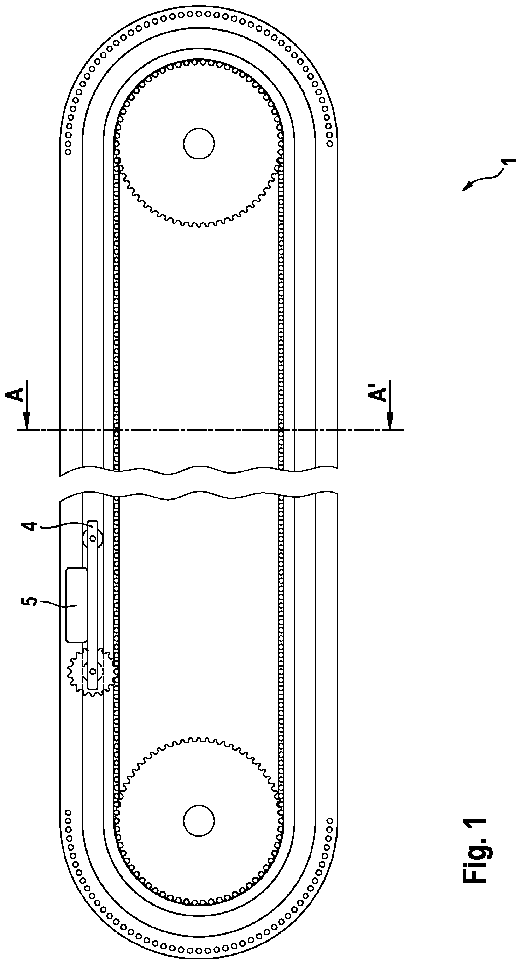

Fig. 1 zeigt schematisiert einen im Stand der Technik, der DE 10 2012 106 548 A1 im Detail erläuterten Stauförderer 1 mit einem beispielhaft skizzierten von einem Endlosförderelement angetriebenen Transportschlitten 4. Gezeigt wird eine Seitenansicht der wesentlichen Bestandteile des Stauförderers 1, d. h. der Transportschlitten 4 für die Aufnahme eines nur in Fig. 1 gezeigten Förderguts 5 (wobei selbstverständlich auch mehrere Transportschlitten 4 vorhanden sein können) sowie die Bestandteile, die für die Führung und den Antrieb des oder der Transportschlitten 4 nötig sind. Auf die Darstellung weiterer Bauteile, beispielsweise eines die gezeigten Elemente tragenden Rahmengestells, wurde aus Übersichtsgründen verzichtet. Es wird auch auf unnötige Wiederholungen verzichtet, da weitere Details der Fig. 1 dem genannten Stand der Technik zu entnehmen sind.

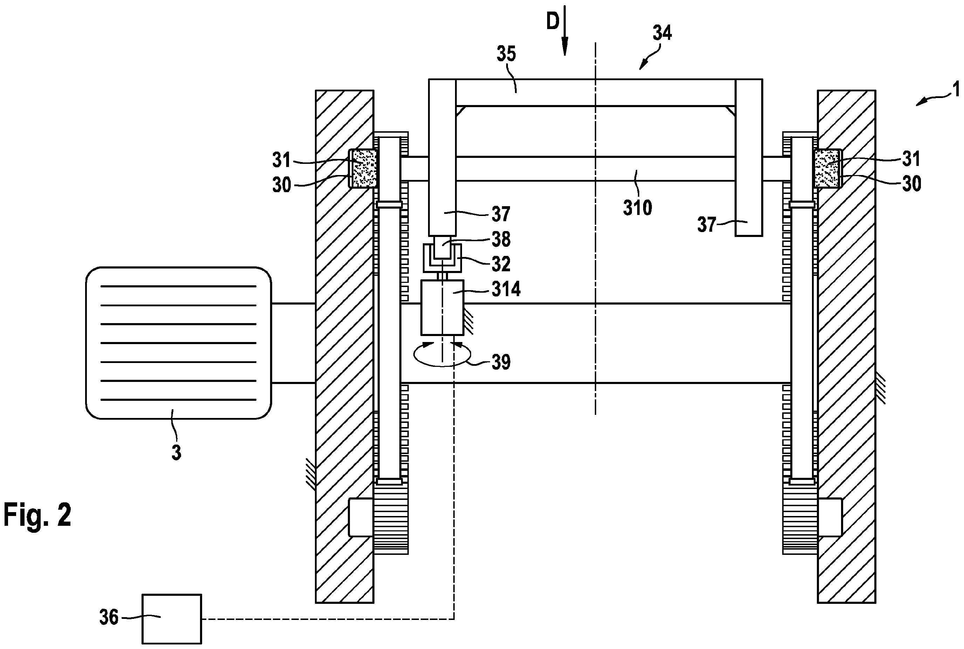

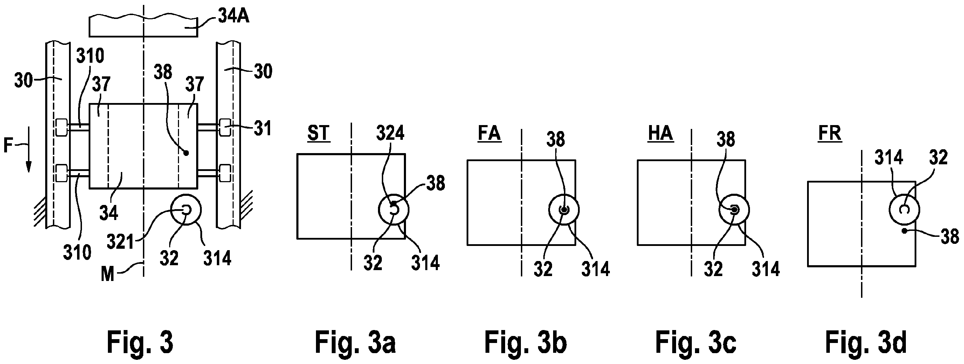

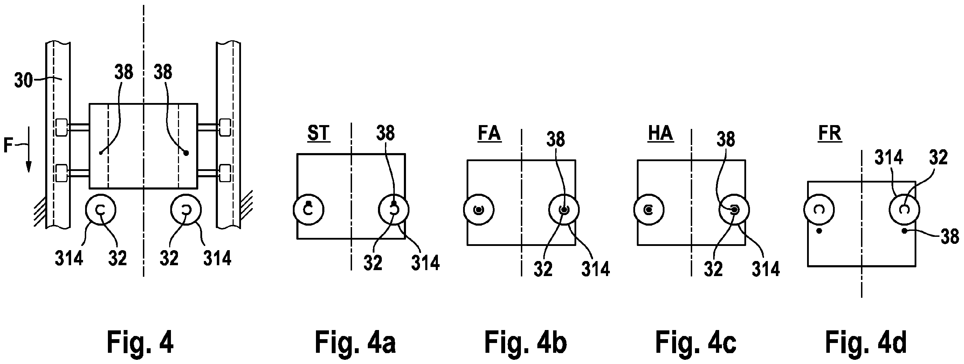

Fig. 2 zeigt eine nicht beanspruchte Vereinzelungsvorrichtung im Zusammenwirken mit einem Werkstückträger 34 (Werkstückträger und Transportschlitten sind in dieser Beschreibung funktionsmäßig gleichzusetzen), beispielhaft integriert in einem Stauförderer 1 dargestellt, gesehen in Fahrtrichtung des Werkstückträgers 34 (siehe auch "F" Fig. 3 und 4). Der Werkstückträger 34 weist eine Trägerplatte 35 und zwei daran befestigte Seitenwände 37 auf, durch welche sich zwei Achsen 310 des Werkstückträgers 34 erstrecken, wobei in Fig. 2 nur die hintere Achse 310 zu sehen ist. Die Positionen der Achsen 310 sind in den Fig. 3 und 4 von oben zu erkennen. Die Werkstückträger 34 werden über in Führungsbahnen 30 geführte Rollen 31 im Stauförderer 1 geführt (siehe auch Fig. 3). Von der, in Fig. 2, linken Seitenwand 37 erstreckt sich ein Halteelement 38, welches in der gezeigten Position, eingefangen in einer Fangklaue 32, dargestellt ist. Diese Position entspricht auch der in Fig. 3b gezeigten Anordnung. Die Fangklaue 32 ist auf der Achse eines maschinenfesten Drehantriebs 314 befestigt und kann sich gemäß dem Pfeil 39 um ihre eigene vertikale Achse drehen. Bevorzugt wird der Drehantrieb 314 als Schrittmotor ausgebildet, mittels welchem jeweils die gewünschte Stellung der Fangklaue 32 angefahren wird (Fig. 3a bis 3d).

Würde nun die Fangklaue 32 aus der in Fig. 2 gezeigten Stellung in die in Fig. 3d dargestellte Stellung drehen, dann würde der Werkstückträger 34 wie in Fig. 3d gezeigt freigegeben sein und seine Fahrt auf dem Stauförderer 1 fortsetzen können. Das Halteelement 38 kann anstatt als einfacher runder Stift als Wälzlager ausgebildet sein, welches sich in einer Ausnehmung 321 der Fangklaue 32 einschmiegt und eine nahe reibungsfreie Drehung der Fangklaue 32 bei eingefangenem Haltelement 38 ermöglicht.

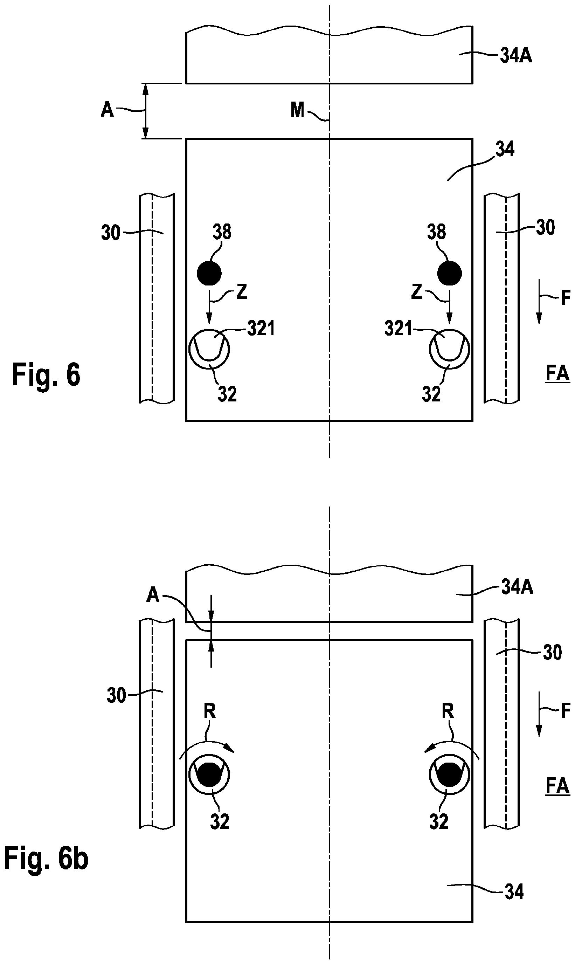

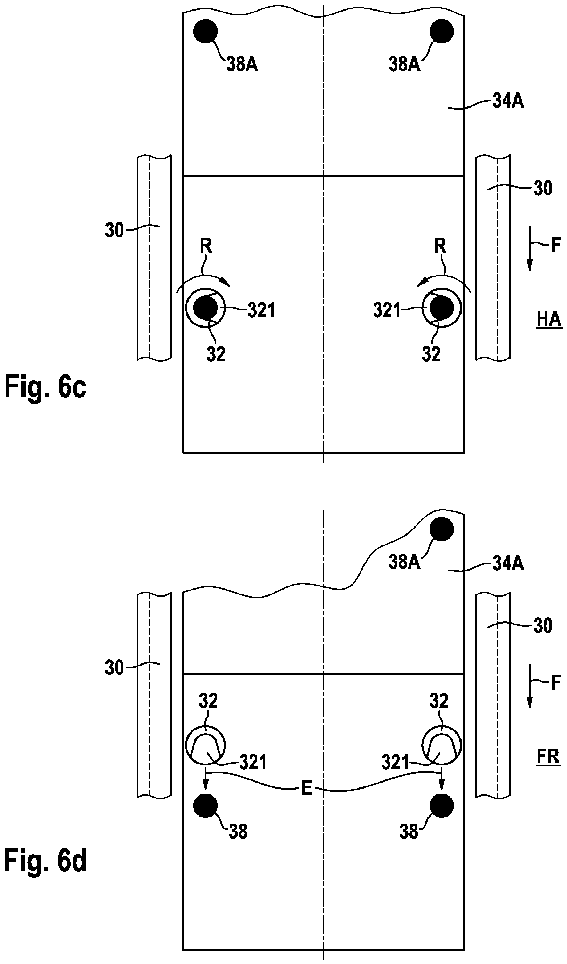

Der Drehantrieb 314 kann aber auch ein z. B. über eine Nockenscheibe gesteuerter Elektromotor sein, wobei die Nockenscheibe zur Steuerung der jeweils gewünschten Drehpositionen entsprechend eingerichtet ist (hier nicht gezeigt). Auch kann anstelle des in der in Fig. 2 gezeigten Position angeordneten Drehantriebs ein Eckgetriebe treten, welches über eine Welle von einem Motor angetrieben wird. In dem Fall, in dem zwei Drehantriebe 314 eingesetzt werden, wie in Fig. 4 bis 4d gezeigt, können diese als zwei Eckgetriebe ausgebildet werden, wobei diese spiegelverkehrt angesteuert werden (nicht gezeigt), um die in den Fig. 4 bis 4d, bzw. Fig. 6, 6b bis 6d gezeigten Drehpositionen einzunehmen.

Eine Steuereinrichtung 36 kann zur Regelung der erfindungsgemäßen Vereinzelungsvorrichtung dienen.

In Fig. 3 ist nun die nicht beanspruchte Vereinzelungsvorrichtung ganz auf das Wesentliche reduziert, gesehen von oben, gemäß Pfeil D von Fig. 2 dargestellt. Man erkennt in der Mitte die als Rechteck schematisch gezeichnete Trägerplatte 35 des Werkstückträgers 34 und - als könnte man durch die Trägerplatte 35 hindurchsehen - das als schwarzer Punkt angedeutete Halteelement 38. In der in Fig. 3 gezeigten Stellung befindet sich der sich in Richtung des Pfeils F fortbewegende Werkstückträger 34 noch in einem gewissen Abstand vor der Fangklaue 32, welche sich hier in der Position eines gespiegelten "C" befindet. Die Fangklaue 32 ist drehfest mit dem vorzugsweise als Schrittmotor ausgebildeten Drehantrieb 314 verbunden und wird durch diesen - geregelt durch eine Steuereinrichtung 36 - in verschiedene gezeigte Positionen wie Stoppstellung ST, Fangstellung FA, Haltestellung HA und Freigabestellung FR gedreht (Fig. 3a bis 3d), um den Werkstückträger 34 zu vereinzeln. Man kann sich vorstellen, dass sich hinter dem Werkstückträger 34 bereits der nächste 34A und weitere nicht gezeigte Werkstückträger nähern (Fig. 3), welche, sobald sich der Werkstückträger 34 in Stopp-, Fang- oder Haltestellung befindet, an diesen Anstoßen und auf diesen auflaufen. Mit Hilfe der nicht beanspruchten Vereinzelungsvorrichtung werden die Werkstückträger wie folgt vereinzelt.

Aus der in Fig. 3 gezeigten Stellung fährt der vom Stauförderer 1 angetriebene Werkstückträger 34 in die in Fig. 3a gezeigte Stoppstellung ST. Das runde Halteelement 38 stößt gegen die Außenseite der rechten Wange 324 der C-förmigen Fangklaue 32 (in Fig. 3a also von oben), wodurch der Werkstückträger 34 angehalten wird. Wird die Fangklaue 32 mittels des Drehantriebs 314 um etwa 90° im Uhrzeigersein gedreht, bewegt sich der Werkstückträger 34 in die Fangstellung FA, wobei das Halteelement 38 in die Ausnehmung 321 der Fangklaue 32 gelangt. Über die Haltestellung HA - die Fangklaue 32 wurde etwa 90° gegen den Uhrzeigersinn gedreht (Fig. 3c) - wandert der Werkstückträger 34 in die in Fig. 3d gezeigte Position, wenn die Fangklaue 32 zuvor in die in Fig. 3d gezeigte Freigabestellung FR gedreht worden war.

Die Freigabestellung FR gemäß Fig. 3d entspricht gleichzeitig auch der Stoppstellung ST gemäß Fig. 3a.

Die Fig. 4 bis 4d zeigen ein zur eben beschriebenen Konstruktion und Vorgehensweise analoge Situationen, für die erfindungsgemäße Vereinzelungsvorrichtung mit zwei Drehantrieben 314 mit zwei zugeordneten C-förmigen Fangklauen 32. Wie in Fig. 4 gut zu erkennen ist, stehen sich zwei als C-förmige Fangklauen 32 ausgebildete Anschläge an der Mittellinie M gespiegelt gegenüber. Das Procedere zur Vereinzelung der Werkstückträger läuft analog zur zuvor geschilderten Vorgehensweise bei nur einem Drehantrieb ab und wird deshalb nicht weiter beschrieben, um Wiederholungen zu vermeiden.

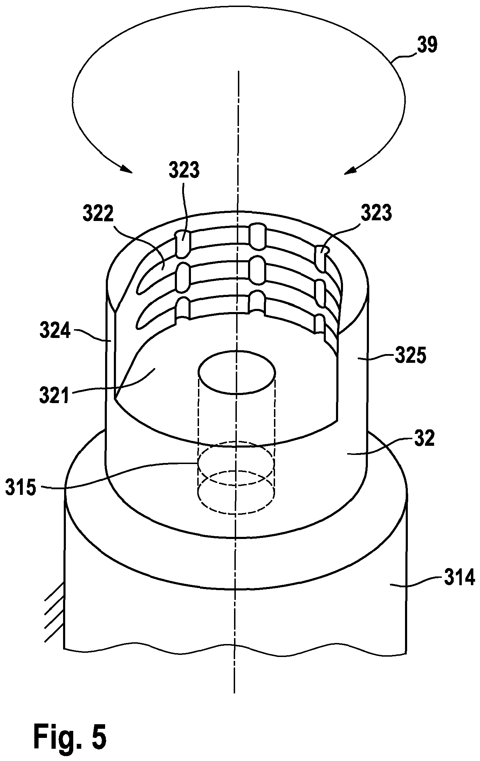

In Fig. 5 ist schematisiert ein Drehantrieb 314 mit angeordneter Fangklaue 32 gemäß der Erfindung in perspektivischer Ansicht dargestellt. Den Drehantrieb 314 stelle man sich zum Stauförderer fest zugeordnet vor, während die Fangklaue 32 gegenüber dem Drehantrieb 314 um eine gestrichelt gezeichnete Achse 315 gemäß dem Pfeil 39 drehbar angeordnet ist, wie im Detail im Vorhergehenden beschrieben wurde. Wangen 324 rahmen die seitliche Öffnung der C-förmigen Fangklaue 32 ein. Die Fangklaue 32 weist auch eine Ausnehmung 321 auf, in welche sich ein (hier nicht gezeigtes) rundes, als Wälzlager ausgebildetes Haltelement 38 einschmiegen kann. Um störende Einflüsse von Verunreinigungen wie Fett und dergl., welche beim Einfahren des runden Halteelements in die Ausnehmung 321 eingebracht werden können, zu minimieren sind Nuten 322 im Inneren der Ausnehmung 321 angeordnet. Die Nuten 322 können vorteilhafterweise auch spiralig eingebracht sein. Ebenso können zum selben Zweck weitere, beispielsweise vertikale Riefen 323 angeordnet sein.

Um die Funktionsweise der erfindungsgemäßen Vereinzelungsvorrichtung noch einmal zu veranschaulichen werden in den Fig. 6, 6b bis 6d im Wesentlichen analog zu den Fig. 4, 4b bis 4d Positionen der ortsfesten Fangklauen 32 der Vereinzelungsvorrichtung und die jeweiligen Stellungen der sich bewegenden Werkstückträger auf seinem Weg in Richtung des Pfeils F gezeigt.

In Fig. 6 sind die für diese Erläuterung erforderlichen Halteelemente 38 eines sich bewegenden Werkstückträgers 34 gezeigt. Abschnitte der rechten und linken Seiten der Führungsbahn 30 sind angedeutet. In Fig. 6 oberhalb des Werkstückträgers 34 ist ein diesem auf dem Stauförderer in einem Abstand A folgender weiterer Werkstückträger 34A angedeutet. Die orts- bzw. maschinenfest angeordneten Fangklauen 32 des Stauförderers weisen mit ihrer in Fig. 6 nach oben zeigenden Ausnehmung 321 zu den als dicke schwarze Punkte gezeichneten Haltelementen 38, bereit zur Aufnahme derselben, wenn sich die Halteelemente 38 des Werkstückträgers 34 zusammen mit diesem in Richtung der Pfeile Z in das Zentrum der Ausnehmungen 321 der Fangklauen 32 bewegen (Fangstellung FA).

Der nächste Verfahrensschritt ist in Fig. 6b gezeigt, wobei die Haltelemente 38 des Werkstückträgers 34 bereits in den Zentren der Fangklauen 32 eingefahren sind. Die Fangklauen 32 der Vereinzelungsvorrichtung halten nun den Werkstückträger 34 fest. Die Fangklauen 32 werden sich mit ihren Ausnehmungen 321 in Richtung der Drehpfeile R "nach innen" in die in Fig. 6c gezeigte Stellung drehen (Haltestellung HA). Ein auf dem Werkstückträger 34 transportiertes (nicht gezeigtes) Werkstück kann nun in einer exakt definierten Stellung des Werkstückträgers 34 relativ zum Stauförderer z. B. von einem (nicht gezeigten) Roboter entnommen werden. Der folgende Werkstückträger 34A hat sich bereits dem vorausfahrenden Werkstückträger 34 genähert. Der Abstand A ist geringer geworden.

Aus der in Fig. 6c gezeigten Situation geht hervor, dass der Werkstückträger 34A an dem vorausfahrenden Werkstückträger 34 anstößt. Der Abstand A ist zu Null geworden. Die Fangklauen 32, in Richtung der Drehpfeile R mit ihren Ausnehmungen 321 "nach innen" gedreht, sind bereit, durch weitere Drehungen in Richtung der Rundpfeile R ihre Ausnehmungen 321 nach (in Fig, 6c) unten zu bewegen (Freigabestellung FR) und den Werkstückträger 34 freizugeben bzw. zu vereinzeln.

In der Darstellung gemäß Fig. 6d ist dies bereits geschehen. Die Ausnehmungen 321 der Fangklauen 32 sind nach unten gedreht und haben die Halteelemente 38 des Werkstückträgers 34 "entlassen". Dieser ist bereits in Richtung der Pfeile E weitergefahren, gefolgt vom nächsten Werkstückträger 34A. Während sich der Werkstückträger 34 von den Fangklauen 32 entfernt, nähert sich der nächste Werkstückträger 34A den Fangklauen 32. Nun werden sich die Fangklauen 32 wieder in die in Fig. 6 oder 4 gezeigte Stellung drehen, um den nächsten Werkstückträger 34A festzuhalten und in der Folge zu vereinzeln.

Der Halte- und Vereinzelungszyklus beginnt von Neuem mit dem Werkstückträger 34A, dem ein weiterer (nicht gezeigter) Werkstückträger 34B folgt und so fort.

### Bezugszeichen

- 1: Stauförderer
- 3: Antrieb Stauförderer
- 4: Transportschlitten
- 5: Fördergut
- 30: Führungsbahn
- 31: Rollen
- 32: Fangklaue
- 34: Werkstückträger
- 34A: Werkstückträger
- 34B: Werkstückträger
- 35: Trägerplatte
- 36: Steuereinrichtung
- 37: Seitenwand
- 38: Halteelement
- 38A: Halteelement
- 39: Pfeil Drehrichtung
- 310: Achse Werkstückträger
- 312: Wälzlager
- 314: Drehantrieb
- 315: Drehachse
- 321: Ausnehmung
- 322: Nuten
- 323: Riefen
- 324: rechte Wange
- 325: linke Wange

- A: Abstand
- D: Pfeil Draufsicht
- F: Pfeil Fortbewegungsrichtung
- FA: Fangstellung
- FR: Freigabestellung
- HA: Haltestellung
- M: Mittellinie
- R: Pfeil Drehrichtung
- ST: Stoppstellung
- Z: Pfeil

## Patentansprüche

1. Stauförderer, mit wenigstens einem Werkstückträger und mit einer Vereinzelungsvorrichtung, mit wenigstens einem Anschlag zum Anhalten und/oder Freigeben des Werkstückträgers und mit einem Antrieb für den Anschlag, welche
a) wenigstens einen Drehantrieb (314), und
b) wenigstens einen an dem Drehantrieb (314) angeordneten im Wesentlichen als C-förmige Fangklaue (32) ausgebildeten Anschlag aufweist,
c) wobei der Drehantrieb (314) derart angeordnet ist, dass er und damit die Fangklaue (32) in verschiedene Stellungen wie eine Stopp-, Fang-, Halte- und Freigabestellung (ST, FA, HA und FR) für den Werkstückträger (34), drehbar, zum Zusammenwirken mit einem Halteelement (38) des Werkstückträgers (34), ausgebildet ist, wobei
d) die Vereinzelungsvorrichtung zwei Drehantriebe (314) mit zwei zugeordneten C-förmigen Fangklauen (32) aufweist, **dadurch gekennzeichnet, dass**
e) der Werkstückträger (34) zwei runde Halteelemente (38) zum Zusammenwirken mit den Fangklauen (32) aufweist,
f) dass die C-förmigen Fangklauen der Vereinzelungsvorrichtung in der Haltestellung (HA) mit Ihren Öffnungen zueinander zeigen und
g) dass die runden Halteelemente (38) als Wälzlager (312), wie z. B. Kugel-, Rollen- oder Nadellager ausgebildet sind.

2. Stauförderer nach Anspruch 1, **dadurch gekennzeichnet, dass** der Außenring der Wälzlager (312) einen Bezug aus Hartgummi aufweist.

3. Stauförderer nach Anspruch 1 oder 2, **dadurch gekennzeichnet, dass** die Drehantriebe (314) Schrittmotoren sind.

4. Stauförderer nach einem der vorhergehenden Ansprüche, **dadurch gekennzeichnet, dass** die Fangklauen (32) in einer Ausnehmung (321) zur Aufnahme der runden Halteelemente (38) eine oder mehrere Nuten (322) und / oder Riefen (323) aufweisen.

5. Stauförderer nach einem der vorhergehenden Ansprüche, **dadurch gekennzeichnet, dass** die Vereinzelungsvorrichtung eine Steuereinrichtung (36) zur Steuerung der Drehantriebe (314) aufweist.

6. Verfahren zum Vereinzeln von Werkstückträgern eines Stauförderers, gemäß einem der vorhergehenden Ansprüche, **gekennzeichnet durch** folgende Schritte:
a) Anhalten oder Stoppen eines Werkstückträgers (34) mittels der C-förmigen Fangklauen (32), wobei diese vom Drehantrieb in eine Stellung gedreht sind, in welcher runde Halteelemente (38) des Werkstückträgers (34) gegen die Außenseiten der Fangklauen (32) anschlagen und den Werkstückträger (34) anhalten,
b) Fangen der runden Halteelemente (38), wobei die Öffnungen der C-förmigen Fangklauen (32) um etwa 90° zu den runden Halteelementen (38) hingedreht werden, bis die runden Halteelemente (38) in den Klauengrund eintauchen können,
c) Halten der runden Halteelemente (38), wobei die Öffnungen der C-förmigen Fangklauen (32) wieder um etwa 90° zurückgedreht werden, sodass die Wangen der Fangklauen (32) wieder im Wesentlichen quer zur Bewegungsrichtung des Werkstückträgers (34) liegen,
d) Freigeben der runden Halteelemente (38), wobei die Öffnungen der C-förmigen Fangklauen (32) um weitere etwa 90° gedreht werden, bis die runden Halteelemente (38) und damit der Werkstückträger (34) von den C-förmigen Fangklauen (32) freigegeben sind und die runden Halteelemente (38) die Ausnehmungen (321) der C-förmigen Fangklauen (32), durch deren Öffnung verlassen können.

7. Verfahren nach Anspruch 6, **dadurch gekennzeichnet, dass** die Drehbewegungen der beiden C-förmigen Fangklauen (32) jeweils zueinander entgegengerichtet ausgeführt werden.

## Claims

1. Accumulating conveyor with at least one workpiece carrier and with a separating device, with at least one limit stop for stopping and/or releasing the workpiece carrier and with a drive for the limit stop which has
a) at least one rotary drive (314), and
b) at least one limit stop designed substantially as a C-shaped trap jaw (32) which is arranged on the rotary drive (314),
c) wherein the rotary drive (314) is arranged in such a manner that it and thus the trap jaw (32) is designed to be rotatable for cooperating with a holding element (38) of the workpiece carrier (34) in various positions such as a stopping, trapping, holding and releasing position (ST, FA, HA and FR) for the workpiece carrier (34), wherein
d) the separating device has two rotary drives (314) with two associated C-shaped trap jaws (32), **characterised in that**
e) the workpiece carrier (34) has two round holding elements (38) for cooperating with the trap jaws (32),
f) **in that** the C-shaped trap jaws of the separating device point towards each other with their openings in the holding position (HA) and
g) **in that** the round holding elements (38) are designed as rolling bearings (312), such as ball, roller or needle bearings for example.

2. Accumulating conveyor according to claim 1, **characterised in that** the outer ring of the rolling bearing (312) has a coating of hard rubber.

3. Accumulating conveyor according to claim 1 or 2, **characterised in that** the rotary drives (314) are stepper motors.

4. Accumulating conveyor according to one of the preceding claims, **characterised in that** the trap jaws (32) have one or a plurality of channels (322) and/or grooves (323) in a recess (321) for receiving the round holding elements (38).

5. Accumulating conveyor according to one of the preceding claims, **characterised in that** the separating device has a control device (36) for controlling the rotary drives (314).

6. Method for separating workpiece carriers of an accumulating conveyor, according to one of the preceding claims, **characterised by** the following steps:
a) Halting or stopping of a workpiece carrier (34) by means of the C-shaped trap jaws (32), said trap jaws being rotated by the rotary drive into a position in which round holding elements (38) of the workpiece carrier (34) strike against the outer sides of the trap jaws (32) and stop the workpiece carrier (34),
b) Trapping of the round holding elements (38), wherein the openings of the C-shaped trap jaws (32) are rotated by approximately 90° to the round holding elements (38) until said round holding elements (38) can insert into the base of the jaws,
c) Holding of the round holding elements (38), wherein the openings of the C-shaped trap jaws (32) are rotated back again by approximately 90° so that the cheeks of the trap jaws (32) again lie substantially transverse to the direction of movement of the workpiece carrier (34),
d) Releasing of the round holding elements (38), wherein the openings of the C-shaped trap jaws (32) are rotated by a further approximately 90° until the round holding elements (38) and thus the workpiece carrier (34) are released from the C-shaped trap jaws (32) and the round holding elements (38) can leave the recesses (321) of the C-shaped trap jaws (32) through their opening.

7. Method according to claim 6, **characterised in that** the rotary movements of the two C-shaped trap jaws (32) are each executed in the opposite direction to one another.

## Revendications

1. Convoyeur d'accumulation, comprenant au moins un support de pièce et un dispositif de séparation, qui comprend au moins une butée pour arrêter et/ou libérer le support de pièce et un entraînement pour la butée, et qui comporte
a) au moins un entraînement en rotation (314), et
b) au moins une butée disposée sur l'entraînement en rotation (314) et réalisée essentiellement sous la forme d'une griffe de saisie (32) en forme de C,
c) l'entraînement en rotation (314) étant disposé de telle manière qu'il, et donc la griffe de saisie (32), est réalisé rotatif dans différentes positions telles qu'une position de blocage, de saisie, de retenue et de libération (ST, FA, HA et FR) pour le support de pièce (34), pour la coopération avec un élément de retenue (38) du support de pièce (34),
d) le dispositif de séparation comportant deux entraînements en rotation (314) dotés de deux griffes de saisie (32) en forme de C associées, **caractérisé en ce que**
e) le support de pièce (34) comporte deux éléments ronds de retenue (38) pour la coopération avec les griffes de saisie (32),
f) **en ce que**, dans la position de retenue (HA), les griffes de saisie en forme de C du dispositif de séparation ont leurs ouvertures tournées l'une vers l'autre et
g) **en ce que** les éléments ronds de retenue (38) sont réalisés sous la forme de paliers à rouleau (312), tels que par exemple des paliers à billes, paliers à rouleaux ou paliers à aiguilles.

2. Convoyeur d'accumulation selon la revendication 1, **caractérisé en ce que** la bague extérieure des paliers à rouleau (312) comporte un revêtement en caoutchouc dur.

3. Convoyeur d'accumulation selon la revendication 1 ou 2, **caractérisé en ce que** les entraînements en rotation (314) sont des moteurs pas à pas.

4. Convoyeur d'accumulation selon l'une des revendications précédentes, **caractérisé en ce que** les griffes de saisie (32) comportent, dans un évidement (321) destiné à recevoir les éléments ronds de retenue (38), une ou plusieurs rainures (322) et/ou cannelures (323).

5. Convoyeur d'accumulation selon l'une des revendications précédentes, **caractérisé en ce que** le dispositif de séparation comporte un moyen de commande (36) pour la commande des entraînements en rotation (314).

6. Procédé de séparation de supports de pièce d'un convoyeur d'accumulation selon l'une des revendications précédentes, **caractérisé par** les étapes suivantes consistant à :
a) arrêter ou bloquer un support de pièce (34) au moyen des griffes de saisie (32) en forme de C, celles-ci étant tournées par l'entraînement en rotation dans une position dans laquelle des éléments ronds de retenue (38) du support de pièce (34) viennent en butée contre des côtés extérieurs des griffes de saisie (32) et arrêtent le support de pièce (34),
b) saisir les éléments ronds de retenue (38), les ouvertures des griffes de saisie (32) en forme de C étant tournées en arrière d'environ 90° vers les éléments ronds de retenue (38), jusqu'à ce que les éléments ronds de retenue (38) puissent s'enfoncer dans le fond des griffes,
c) retenir les éléments ronds de retenue (38), les ouvertures des griffes de saisie (32) en forme de C étant retournées en arrière dans d'environ 90°, de telle sorte que les joues des griffes de saisie (32) se trouvent de nouveau **essentiellement** transversales au sens de déplacement du support de pièce (34),
d) libérer les éléments ronds de retenue (38), les ouvertures des griffes de saisie (32) en forme de C étant tournées d'environ 90° supplémentaires, jusqu'à ce que les éléments ronds de retenue (38), et donc le support de pièce (34), soient libérés des griffes de saisie (32) en forme de C et que les éléments ronds de retenue (38) puissent quitter les évidements (321) des griffes de saisie (32) en forme de C, par leur ouverture.

7. Procédé selon la revendication 6, **caractérisé en ce que** les mouvements rotatifs des deux griffes de saisie (32) en forme de C sont exécutés respectivement dans des sens opposés l'un par rapport à l'autre.
